# EUROPEAN PATENT APPLICATION

(11) **EP 3 798 919 A1**
(43) Date of publication of application: **31.03.2021**
(21) Application number: 19306208.0
(22) Date of filing: 26.09.2019
(51) Int. Cl.: G06N 3/04, G06N 3/063

(54) **HARDWARE ARCHITECTURE FOR SPIKING NEURAL NETWORKS AND METHOD OF OPERATING**

(71) Applicant: Université Côte d'Azur, 06103 Nice Cedex 2 (FR); Centre National de la Recherche Scientifique (CNRS), 75794 Paris Cedex 16 (FR)
(72) Inventor: MIRAMOND, Benoît, 06600 Antibes (FR); ABDERRAHMANE, Nassim, 06000 Nice (FR)
(74) Representative: Marks & Clerk France

(57) **Abstract**

The present invention provides a hardware architecture for spiking neural networks which is characterized in that it combines a fully-parallel architecture with a time-multiplexed architecture.

## Description

### Technical Field

The present invention relates to the field of computing architectures and more particularly relates to hardware architecture for spiking neural networks and a method for operating the network.

### Background Art

Machine learning is generating unprecedented interest in research and industry, due to recent results in many applied contexts such as image classification and abject recognition. However, the deployment of these systems requires huge computing capabilities, thus making them unsuitable for embedded systems. To deal with this limitation, many researchers are investigating brain-inspired computing, which is an alternative to the conventional Von Neumann architecture based computers (CPU/GPU) that meets the requirements for computing performance. However this approach suffers energy-efficiency, and neuromorphic hardware circuits that are adaptable for both parallel and distributed computations need to be designed.

Over the past decade, Artificial Intelligence (AI) has been increasingly attracting the interest of industry and research organizations. Artificial Neural Networks (ANNs) are derived and inspired from the biological brain, and have become the most well-known and frequently used form of AI. Even though ANNs have garnered a lot of interest in recent years, they stem from the 1940s with the apparition of the first computer. Subsequent work and advancements have lead to the development of a wide variety of ANN models. However, many of these models settled for theory and were not implemented for industrial purposes back then. Recently, those algorithms became competitive because of two factors: first, modern computers have reached sufficient computing performance to process ANN training and inference; second, the amount of data available is growing exponentially, satisfying the extensive training data requirements for ANNs. However, the energy and hardware-resources intensiveness imposed by computation in complex form of ANNs are not matching with another current emerging technology: IoT (Internet of Things) and Edge Computing. To allow for ANNs to be executed in such embedded context, one must deploy dedicated hardware architectures for ANN acceleration. In this case, the design of neuromorphic architectures is particularly interesting when combined with the study of spiking neural networks.

Spiking Neural Networks (SNN) for Deep Learning and Knowledge Representation is a current issue that is particularly relevant for a community of researchers interested in both neurosciences and machine learning. Several specific hardware solutions have already been proposed in the literature, but they are only solutions isolated from the overall design space where network topologies are often constrained by the characteristics of the circuit architecture. The inventors recommend the opposite approach, which consists in generating the architecture that best supports the network topology.

Thus, there is the need of a solution for to solve the aforementioned problems. And there is a need for neuromorphic hardware circuits that are adaptable for both parallel and distributed computations. The present invention offers such solution.

### Summary of the invention

According to a first embodiment of the present invention, there is provided a system as further described in the appended independent claim 1.

An object of the present invention is a neuromorphic hardware architecture adapted for the implementation of the spiking neural networks. Particularly, the present invention offers a hybrid-architecture combining fully-parallel hardware layers and time-multiplexed hardware layers. The hybrid architecture of the present invention meets the application-specific constraints.

Advantageously, a novel Hybrid Architecture, which combines the advantages of both multiplexed and parallel hardware implementations is described.

Indeed, in this architecture, the first hidden layer is implemented in parallel, and the deeper layers are time-multiplexed : this architectural configuration fits well with the Spike Select coding method.

The hybrid-architecture uses information coding scheme for conversion of input data to spikes having a coding paradigm characterized by a low number of spikes propagating in the network.

Advantageously, the number of spikes is reduced while keeping the same classification accuracy with fewer events to process. By doing so, the amount of power consumed by the hardware is reduced.

The hybrid architecture has been developed in VHDL and simulated at the Register Transfer Level (RTL).

Most of the spiking activity in the network is located in the first layer. Therefore, the first hidden layer is the most solicited layer during processing. To take advantage of this aspect, the Hybrid Architecture designed, is mixing both Time-Multiplexed Architecture (TMA) and Fully-Parallel Architecture (FPA), where first, the initial two layers are implemented using a Neural Core module as in (FPA) and second, the remaining layers are time-multiplexed using one (NPU) per layer, as in (TMA). The time-multiplexed part is driven by a Network Controller used to manage and connect the NPUs to an SDRAM holding their logical weights and to retrieve the weights from the external SDRAM memory and forward them to the corresponding (NPU). This novel hybrid architecture is particularly appropriated for the use of the Spike select coding in which spiking activity is concentrated in the first layer.

The Hybrid Architecture of the present invention takes advantage of the increasing spiking activity sparsity as it goes deeper into the network. This novel hybrid structure having a highly-parallel computation core for most solicited layers, and time-multiplexed computation units for deeper layers, when combined with the proposed Spike Select Coding appears to be one of the most suitable approaches for future Deep SNN implementation into embedded systems.

A hardware architecture for spiking neural networks is claimed as comprising :
- a spike generator module for receiving an input and generating a flow of spikes ;
- an input module for receiving and filtering the flow of spikes;
- a plurality of hidden layers for processing the spikes;
- an output module for selecting an output winner class; and
- a network controller coupled to a memory for handling the addresses of the weights used within the hidden layers;
   and wherein the hardware architecture is characterized in that the input module is implemented as a fully-parallel architecture and the plurality of hidden layers is implemented as a time-multiplexed architecture.

According to various embodiments:
- the spike generator is implemented as an information coding method such as Rate coding or Spike select.
- the input module comprises an input layer to receive a flow of spikes and a first hidden layer implemented as fully-parallel circuits to process the spikes.
- the plurality of hidden layers comprises each a Neural Processing Unit to emulate the time-multiplexed layers.
   - the output module is a Terminate Delta like module.
- the memory is a SDRAM.

The invention also claims a Field Programmable Gate Array (FPGA) or an Application Specific Integrated Circuit (ASIC) comprising the claimed hybrid architecture.

Further advantages of the present invention will become clear to the skilled person upon examination of the drawings and detailed description. It is intended that any additional advantages be incorporated therein.

### Description of the drawings

Embodiments of the present invention will now be described by way of example with reference to the accompanying drawings in which like references denote similar elements, and in which:
Figure 1 shows a general block diagram of hardware hybrid architecture of the present invention;
Figure 2 shows a detailed block diagram of a Neural Core module of the present invention in an embodiment;
Figure 3 shows a detailed block diagram of a Neural Processing Unit module of the present invention in an embodiment;
Figures 4a and 4b show detailed block diagrams of Terminate module of the present invention in two embodiments; and
Figure 5 shows a detailed block diagram of a Network controller module of the present invention in an embodiment.

### Detailed description of the invention

Before going to the description of the figures, a reference is made to an article published by the inventors titled "Design Space Exploration of Hardware Spiking Neurons for Embedded Artificial Intelligence", 2019, which is incorporated herein in its entirety.

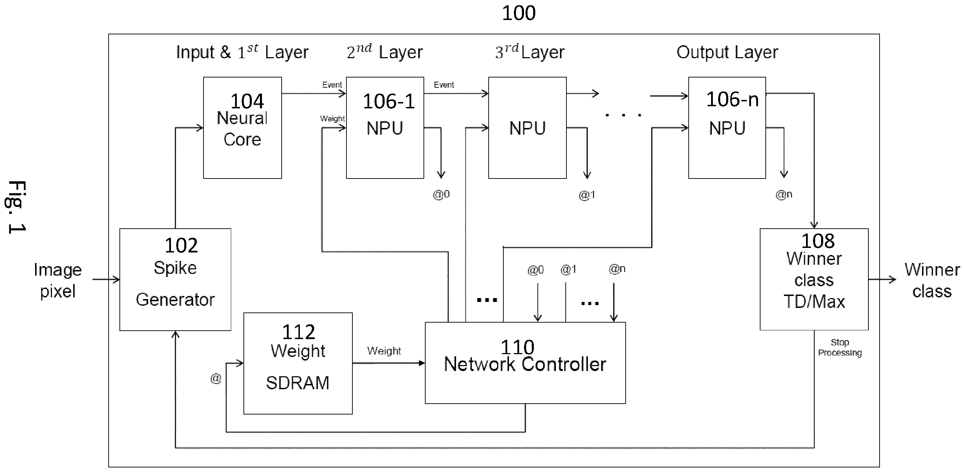

With reference first to figure 1 which is a non limited example, a general architecture of hardware hybrid architecture of the system of the present invention is depicted.

The system 100 is illustrated as having several functional block circuits comprising a Spike Generator 102, an input module 104 or Neural Core (NC) module defining an input layer and a first layer, several hidden layers 106-i or Neural Processing Unit (NPU) modules defining a plurality of hidden layers from a second hidden layer 106-1 up to an output layer 106-n, and an output module 108 or Terminate/Winner module. The system further comprises a Network Controller 110 and a Memory 112.

The general operating of the system 100 is to generate a spike flow from pixel of an image, which is input to the Neural Core 104.

The information is encoded into spikes, inspiring from neuroscience. Indeed, the neuron model mimics biological neurons and synaptic communication mechanisms based on action potentials. The information is thus represented as a flow of spikes, with a wide variety of information coding techniques, to name a few Rate Coding, Spike Select, Single Burst. The person skilled in the art will refer to the article of the inventors previously cited to get more details of these methods.

The NC is implemented as a Fully Parallel Architecture (FPA) to be able to process in parallel the flow of spikes and to filter the number of spikes output from the first layer, named as 'Event' as a general reference. Each logic neuron is represented by a dedicated hardware circuit, allowing parallelize the processing. Next the flow of spikes is successively input to each further layer from the second layer to the output layer with a filtering of the number of spikes at each layer. Advantageously, as the number of spikes is drastically reduced by the FPA module, there is no such need of parallel computing and the NPU modules are implemented as a Time-Multiplexed Architecture (TMA) to allow sequentially processing the spikes. There is as much as computing cycles as the number of logical neurons implemented in the NPU.

The number of layers is predefined for a specific machine learning application.

The Terminate module 108, also designated as a Winner Class module, determines if the classification process is ended or not by determining if a sufficient number of spikes has been received to classify the input image. If not, the process is iterated, or the process stops.

The Network Controller 110 allows handling the addresses and the weights for the process. The Network Controller is coupled to a Memory 112 which is able to store the weights. Memory usage is the common limitation for SNN architectures, which is due to all the parameters and activities of the neurons that must be stored. From that perspective, in order to deal with deeper networks that require a significant memory size, the FPGA on-chip memory will not be sufficient. Therefore, an external memory is preferably used to overcome this problem. To reinforce the memory capabilities of the FPGA fabric, a SDRAM is used in a preferred embodiment. The Network Controller module connects the other modules to the external memory.

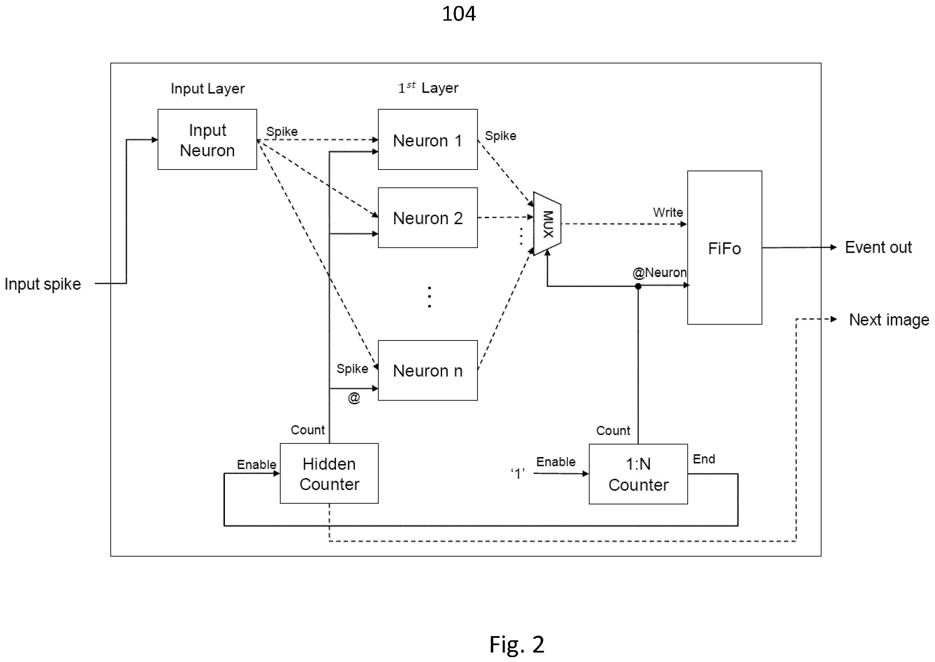

Figure 2 shows a detailed block diagram of a Neural Core module 104 of the present invention in an embodiment. The Neural Core module is the computation unit which emulates the two first layers (input layer and first hidden layer) of the Hybrid Architecture (HA) of the present invention. This module includes an Input Neuron Module which forwards input spikes to downstream neurons. "IF Neuron Module" integrates incoming events from the Input Neuron Module and generates spikes according to "Integrate and Fire" rule. The weights are stored in registers, so that each "IF Neuron module" has its weights in a dedicated register. There are as many "IF Neuron Module" as logical neurons in the layer. Their outputs are stored in a FiFo buffer as events, with a Counter Module indicating the corresponding neuron address to be stored. The input neuron forwards input spikes, spike by spike, to the first hidden layer neurons. The first hidden counter is indicating to that hidden neurons the address of the input spike in order to retrieve their appropriate weights. Another counter (1:N) is controlling a MUX component to store the first hidden layer's spikes in a FiFo memory.

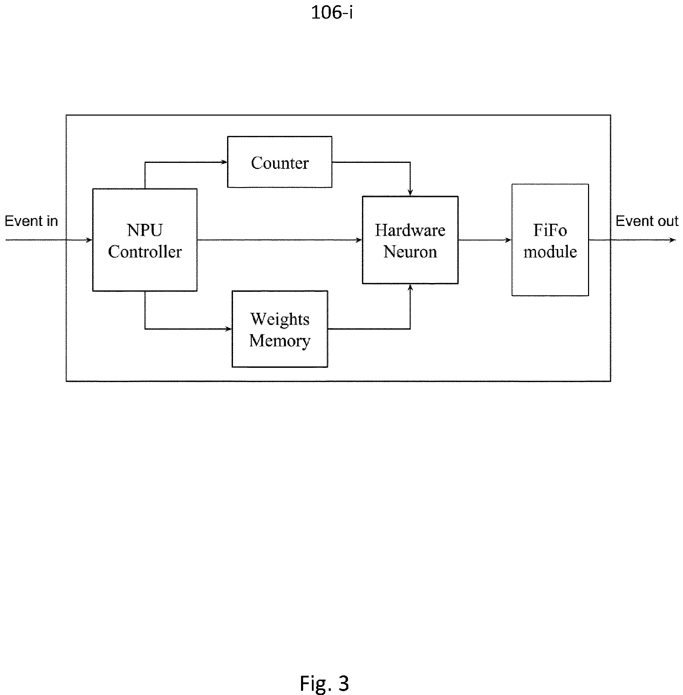

Figure 3 shows a detailed block diagram of a Neural Processing Unit module 106-i of one hidden layer of the present invention in an embodiment. The (NPU) is used to emulate the time-multiplexed layers. When there is an input event to process by the NPU, first, the hardware neuron is enabled by the NPU controller to retrieve the address of the logical neuron it represents from the counter and the corresponding weights from the memory block. Secondly it operates its computation, and whenever it fires, the output spikes is stored in a FiFo as an event.

A single IF Neuron module operates successively for all neurons in the layer. Moreover, the NPU includes a FiFo Memory module, a Counter module and an NPU controller. These modules are connected as shown in figure 3 to form a NPU which processes spiking events in a coherent way. However, besides the NPU controller, all the other modules as previously described are used by the NPU to accomplish their dedicated tasks. The goal of the NPU Controller is to manage the different NPU modules to trigger logical neurons in a coherent way, allowing the hardware neuron to be fed with valid weights and activities. In addition, NPU controllers of different NPUs are connected together in order to ensure synchronization at the network level. This synchronization is required as output classification process (Terminate module) depends on the arriving order of the spikes. Each NPU module can represent several logical neurons thanks to time-multiplexing.

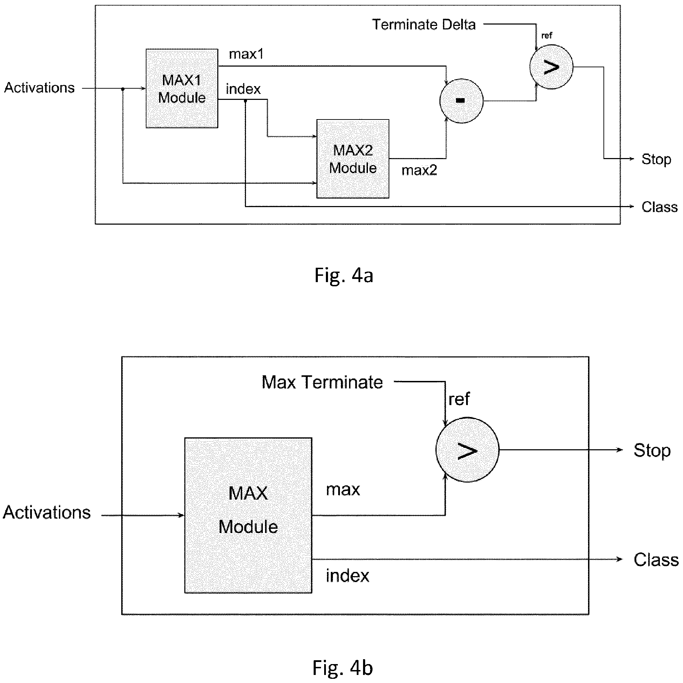

Figures 4a and 4b show detailed block diagrams of Terminate module of the present invention in two embodiments. Before starting the description, let's one give a quick reminder concerning class selection procedures. First of all, note that each output neuron corresponds to a data class. During inference, the winning class is selected as the most spiking output neuron. In Terminate Delta (Figure 4a) procedure, the class prediction is enacted when the most spiking neuron has spiked *delta* times more than the second most spiking neuron. On other hand, in Max Terminate (Figure 4b), the classification process is completed whenever an output neuron (the most spiking neuron) reaches *max-value* spikes. *Delta-value* and *max-value* are user-defined parameters, usually set at 4.

For the design of the present hybrid architecture, to select the output winner class, preferably the Terminate Delta or the Max Terminate are chosen because they offer state-of-the-art accuracy and fast class selection. The figures 4a and 4b show the internal structures of these modules. The input of the module is a vector "Activations" containing the output activity of the SNN (number of spikes emitted by each output neuron so far) .

On one hand, in the Terminate Delta module two *maximum sub-modules* are designed to detect the maximum value of an array, which are then used to determine the winning class and to terminate the processing. The first *maximum sub-module,* namely Max1, detects the maximum value of the output activation vector, and the second, namely Max2, detects the second maximum value of this same vector. The difference between the outputs of Max1 module and Max2 module is then computed. Finally, if the difference is greater than a threshold *delta-value,* the class corresponding to Max1 Module is enacted as the winner.

On the other hand, the Max Terminate module integrates only one *maximum* block that returns the index of the output neuron with the highest spiking activity and its activity. Then this activity is compared to a user-defined threshold *max-value.* If the maximum spiking activity is greater than *max-value,* the corresponding output neuron is enacted as the winner class, and the processing is stopped.

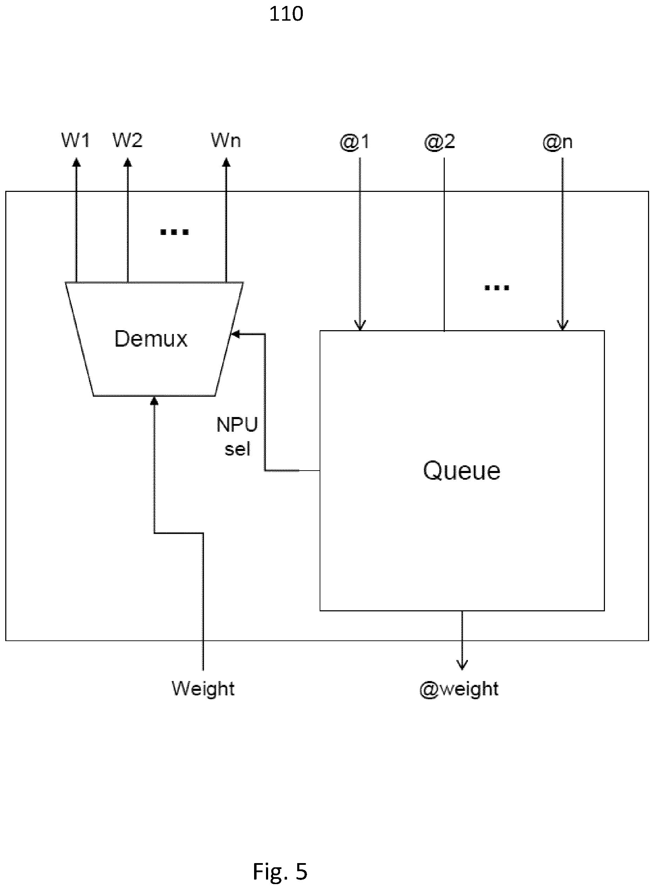

Figure 5 shows a detailed block diagram of a Network Controller module 110 of the present invention in an embodiment. The Network Controller module is a combination of a FiFo module (Queue) and a demultiplexer (DEMUX). The FiFo module accesses the SDRAM according to the NPU requests with a first-come-first-served policy, i.e., when an NPU requests a weight, this request is put in the FiFo queue. Then, whenever the weight is ready, it is sent via the DEMUX block by selecting the right NPU module.

It has to be appreciated that while the invention has been particularly shown and described with reference to a preferred embodiment, various changes in form and detail may be made therein without departing from the spirit, and scope of the invention. The invention may be advantageously implemented as Field-Programmable Gate Arrays (FPGA) or Application Specific Integrated Circuit (ASIC).

## Claims

1. A hardware architecture for spiking neural networks comprising :
- a spike generator module (102) for receiving an input and generating a flow of spikes ;
- an input module (104) for receiving and filtering the flow of spikes;
- a plurality of hidden layers (106-i) for processing the spikes;
- an output module (108) for selecting an output winner class; and
- a network controller 110 coupled to a memory 112 for handling the addresses of the weights used within the hidden layers;
the hardware architecture being **characterized in that** the input module is implemented as a fully-parallel architecture and the plurality of hidden layers is implemented as a time-multiplexed architecture.

2. The hardware architecture of claim 1 wherein the spike generator is implemented as an information coding method such as Rate coding or Spike select.

3. The hardware architecture of claim 1 or 2 wherein the input module comprises an input layer to receive a flow of spikes and a first hidden layer implemented as fully-parallel circuits to process the spikes.

4. The hardware architecture of anyone of claims 1 to 3 wherein the plurality of hidden layers comprises each a Neural Processing Unit to emulate the time-multiplexed layers.

5. The hardware architecture of anyone of claims 1 to 4 wherein the output module is a Terminate Delta like module.

6. The system of anyone of anyone of claims 1 to 5 wherein the memory is a SDRAM.

7. A Field Programmable Gate Array (FPGA) comprising the hybrid architecture of anyone of claims 1 to 6.

8. An Application Specific Integrated Circuit (ASIC) comprising the hybrid architecture of anyone of claims 1 to 7.
